# EUROPEAN PATENT SPECIFICATION

(11) **EP 0 331 473 B1**
(45) Date of publication and mention of the grant of the patent: **09.06.1993**
(21) Application number: 89302054.5
(22) Date of filing: 01.03.1989
(51) Int. Cl.: A01K 39/01

(54) **Poultry feed conveyor**
Geflügelfutterförderer
Transporteur de nourriture pour volaille

(30) Priority: 03.03.1988 GB 8805121
(43) Date of publication of application: 06.09.1989
(73) Proprietor: UNIVERSITY OF WOLVERHAMPTON, Wolverhampton, WV1 1SB (GB)
(72) Inventor: Sharman, Richard Ian, Peterborough Cambridgeshire, PE1 4YD (GB)
(74) Representative: Russell, Paul Sidney

(56) References cited:
- FR-A- 1 228 761
- FR-E- 77 402
- US-A- 2 699 250
- US-A- 2 754 801
- US-A- 2 984 338

## Description

This invention is concerned with a poultry feeding system comprising a storage hopper for feed, a flat-bottomed trough extending from the hopper along a continuous path, and an endless drag chain arranged to run along the bottom of the trough to move feed released from the hopper along the trough, the chain comprising links which each comprise a longitudinally-extending body traversed by a cross-piece which extends between the side walls of the trough to push the feed along the trough.

Such equipment is suitable for use in moving feed along open troughs in intensive poultry houses, the feed so being brought to the birds in a controlled manner from a storage hopper.

Various types of equipment used for this purpose include drag chains, metal centreless spirals, travelling hoppers and cable and disc conveyors. The present invention relates to equipment of that first kind, in which a travelling drag chain slides along the trough and so hauls the feed material along. The chain is endless, and its flexibility permits it to follow a suitable trough path from the hopper, through the poultry house and back to the hopper for recharging. Known drag chains of this kind comprise metal chain links which hook on to one another to form the endless chain. The links of such a drag chain are each formed to present a form of barrier across the trough, the barriers of the chain so serving to push the feed along the trough.

An example of a poultry feed conveyor incorporating such a drag chain is shown in FR-E-77402, each chain link comprising a longitudinally-extending body traversed by a cross-piece extending between side walls of the trough, the bodies and cross-pieces of the chain so forming a grid.

A problem which arises with such known conveyors is wastage of feed through scooping and flicking of the feed by the birds. One known way of reducing that problem is to put a grid over the feeding trough, to limit the birds' movements in reaching the feed.

The invention is characterised in that the cross-pieces present similar upstanding feed-engaging surfaces on each of opposite sides, at least the lower portions of which are raked from the lowermost edges of the cross-piece to provide a scraping action in sliding in either direction along the trough, upstanding bodies and cross-pieces of the chain forming a grid which compartmentalises the trough to inhibit flicking of feed from the trough by the poultry.

Preferred features of the invention are set out in the dependent claims. Preferably, each link is a unitary moulding of a plastics material and comprises coupling formations arranged for pivotal coupling of the link to the adjacent links in the chain. The coupling formations may be apertured to enable coupling pins to be introduced vertically through them. In a preferred arrangement, the formation at one end of the link comprises an eye and the formation at the other end of the link comprises a vertically-spaced pair of eyes, whereby the single eye at said one end of a link in a chain can be introduced between the pair of eyes at said other end of an adjacent link for coupling by means of a pin inserted vertically through the three aligned eyes.

There now follows a detailed description, to be read with reference to the accompanying drawings, of apparatus comprising a drag chain for moving poultry feed along a trough. It is to be understood that this apparatus is described to illustrate the invention by way of example.

In the accompanying drawings:
Figure 1 is a plan view showing a portion of an endless drag chain lying in a trough and guided through a right-angled corner by means of a guide wheel;
Figure 2 is a plan view, on a larger scale, of one link of the chain; and
Figure 3 is a side elevation of the link.

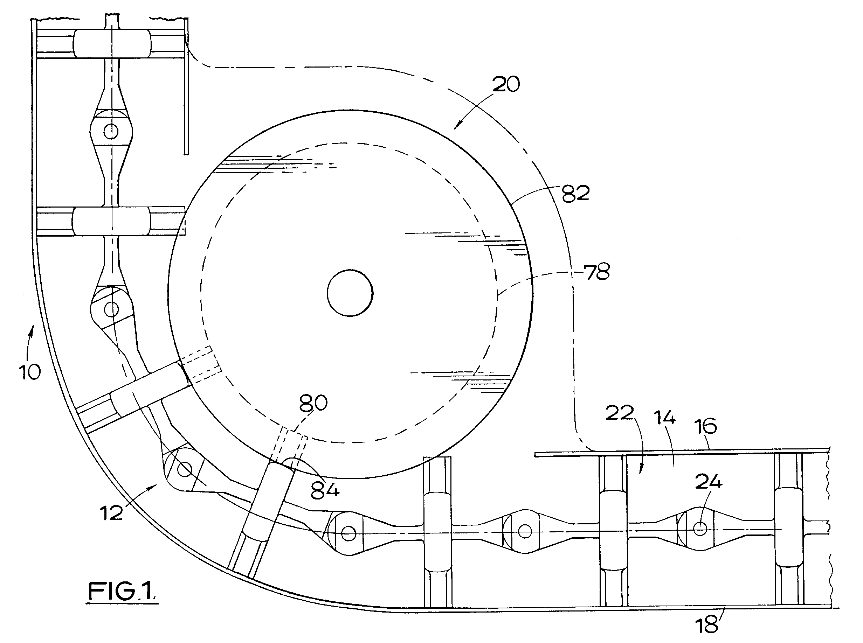

In apparatus for conveying a powdery particulate feed material from a storage hopper to the birds in an intensive poultry house, a feeding trough 10 extends along a required path through the house. The trough extends continuously from, and back to, the storage hopper. An endless drag chain 12 lies in the bottom of the trough 10, on a flat bottom surface 14 between upstanding side walls 16 and 18 of the trough. At each corner between straight runs of the trough, one such corner being illustrated in Figure 1, a freely rotatable guide wheel 20 serves to guide the chain through the corner.

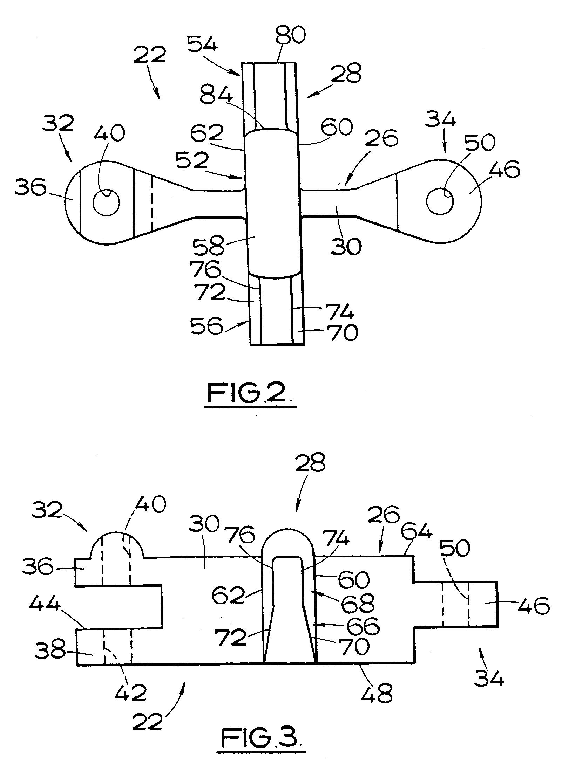

The chain is made up of moulded plastics links 22 which are pivotally coupled together, end to end, by means of hardened steel pins 24. Each link, of which one is shown in detail in Figures 2 and 3, is a unitary moulding of an acetal plastics resin. The link is of cruciform shape as seen in plan, comprising a longitudinally-extending body 26 crossed centrally, and perpendicularly, by a cross-piece 28.

The body 26 comprises a middle portion which is in the general form of an upstanding web 30 which at each end is thickened (widthwise of the link, as seen in Figure 2) to merge with first and second coupling formations 32 and 34. The first coupling formation 32 forms co-axially arranged upper and lower eyes 36 and 38 which have aligned apertures 40 and 42, respectively, through them. The two eyes 36 and 38 are vertically spaced apart to form a slot 44 between them. The second coupling formation 34 forms a single eye 46 which is of similar thickness to the slot 44 (but not greater) and is at the same height as the slot above a flat cruciform bottom surface 48 of the link. An aperture 50, similar to the aligned apertures 40 and 42 in the first coupling formation, extends through the eye 46 of the second coupling formation, the axes of the three apertures 40,42 and 50 being perpendicular to the flat bottom surface 48 of the link.

The cross-piece 28 of the link, which extends equally to the two sides of the body 26, comprises a central portion 52 and two end portions 54 and 56. The length of the central portion is approximately half the length of the cross-piece as a whole. The central portion 56 forms a drive shoulder presenting a semi-cylindrical convex uppermost surface 58, which in the axial direction extends longitudinally of the cross-piece, and which arcuately extends between first and second side faces 60 and 62 which are perpendicular to the bottom surface 48 of the link. The surface 58 projects above a top surface 64 of the body 26.

The two end portions 54 and 56 of the cross-piece are identical. Each comprises an upwardly-tapering lower portion 66 and a parallel-sided upper portion 68. The lower portion 66 comprises convergent first and second side faces 70 and 72; at the bottom surface 48, the lower portion is of the same width (i.e. measured lengthwise of the body 26) as the central portion 52 but the side faces 70 and 72 slope inwards, being equally but oppositely inclined to parallel planes perpendicular to the bottom surface 48. The upper portion 68 comprises first and second side faces 74 and 76 which are in parallel with those planes, as seen in the drawings.

The form of the links, each comprising its upstanding web 30 and cross-piece 28 of similar height, serves to create a grid which compartmentalises the trough space to inhibit flicking of the feed by the poultry, so reducing wastage of the feed.

In forming the chain 12, the single eye 46 of each link is inserted into the slot 44 of a next link and a coupling pin 24 is inserted through the aligned apertures 40,42 and 50 to secure the links together pivotally. The bottom surfaces 48 of the links lie flat on the bottom surface 14 of the trough 10, the spacing between the side walls 16 and 18 of the trough being similar (but not less than) the length of the chain cross-pieces 28. The chain is so arranged to slide along the trough, pushing feed material along from the point of supply at the storage hopper by means, principally, of the cross-pieces 28.

The chain can be driven with equal effect in either direction, the first and second side faces 60, 70, 74 and 62, 72, 76, respectively, being arranged in the same way. The raked-back side faces 70 and 72, extending from lowermost edges of the cross-piece, are arranged to give a scraping action which resists any tendency for the links to ride over the feed in the trough.

The chain can be driven by means of an overhead double sprocket wheel (not shown) engaging the half-round drive shoulders formed by the central portions 52 of the links, the pairs of sprocket teeth straddling the body web 30 of each link in turn to engage the drive shoulder to each side of the web. The guide wheel 20, such as can be provided at each corner of the trough path, provides a lower cylindrical surface 78 to be engaged by end faces 80 of the link cross-pieces, and an upper cylindrical surface 82 of greater diameter to be engaged by end faces 84 of the drive shoulders, as can be seen in Figure 1.

## Claims

1. A poultry feeding system comprising a storage hopper for feed, a flat-bottomed trough (10) extending from the hopper along a continuous path, and an endless drag chain (12) arranged to run along the bottom of the trough (10) to move feed released from the hopper along the trough, the chain (12) comprising links (22) which each comprise a longitudinally-extending body (26) traversed by a cross-piece (28) which extends between the side walls (16,18) of the trough (10) to push the feed along the trough, characterised in that the cross-pieces (28) present similar upstanding feed-engaging surfaces (70,72) on each of opposite sides, at least the lower portions of which are raked from the lowermost edges of the cross-piece (28) to provide a scraping action in sliding in either direction along the trough (10), upstanding bodies (26) and cross-pieces (28) of the chain forming a grid which compartmentalises the trough (10) to inhibit flicking of feed from the trough (10) by the poultry.

2. A poultry feeding system according to claim 1 characterised in that the cross-pieces (28) of the links form drive shoulders (58) for engagement by a sprocket wheel arranged to drive the chain along the trough.

3. A poultry feeding system according to either of claims 1 and 2 characterised in that each of the links (22) is cruciform.

4. A poultry feeding system according to any one of claims 1 to 3 characterised in that the longitudinally-extending bodies (26) of the links comprise coupling formations (32, 34) enabling pivotal coupling of the links to one another in formation of the chain.

5. A poultry feeding system according to claim 4 characterised in that a coupling formation (34) at one end of each link comprises an eye (46) and a coupling formation (32) at the other end of the link comprises a vertically-spaced pair of eyes (36,38), whereby the single eye (46) at said one end of a link in the chain is introduced between the pair of eyes (36, 38) at said other end of an adjacent link and the links coupled by means of a pin (24) inserted vertically through the three aligned eyes.

6. A poultry feeding system according to any one claims 1 to 5 characterised in that each link (22) is a unitary moulding of a plastics material.

7. A poultry feeding system according to any one of claims 1 to 6 characterised in that the chain is guided around a corner by a freely rotatable guide wheel (20) arranged to be engaged by end faces (80, 84) of the link cross-pieces (28).

## Patentansprüche

1. Geflügelfütterungsanlage, umfassend einen Speichertrichter für Futter, eine mit einem flachen Boden versehene Rinne (10), die sich von dem Trichter entlang einer durchgehenden Bahn erstreckt, und eine Endlos-Schleppkette (12), die derart angeordnet ist, daß sie entlang dem Boden der Rinne (10) läuft, um aus dem Trichter abgegebenes Futter entlang der Rinne zu bewegen, wobei die Kette (12) Glieder (22) aufweist, die jeweils einen langgestreckten Körper (24) aufweisen, der von einem Querstück (28) überquert wird, welches sich zwischen den Seitenwänden (16, 18) der Rinne (10) erstreckt, um das Futter entlang der Rinne zu stoßen, **dadurch gekennzeichnet,** daß die Querstücke (28) auf jeder der einander abgewandten Seiten ähnliche hochstehende Futtermitnahmeflächen (70, 72) aufweisen, von denen zumindest die unteren Abschnitte ausgehend von den tiefsten Kanten des Querstücks (28) geneigt sind, um beim Gleiten in jede Richtung entlang der Rinne (10) eine Kratzwirkung zu erreichen, wobei hochstehende Körper (26) und Querstücke (28) der Kette ein Gitter bilden, welches die Rinne (10) abschottet, um ein Herausschleudern von Futter aus der Rinne (10) durch das Geflügel zu verhindern.

2. Geflügelfütterungsanlage nach Anspruch 1, **dadurch gekennzeichnet,** daß die Querstücke (28) der Glieder Antriebsschultern (58) für das In-Eingriff-Kommen mit einem Kettenrad bilden, welches die Kette entlang der Rinne antreibt.

3. Geflügelfütterungsanlage nach Anspruch 1 oder 2, **dadurch gekennzeichnet,** daß jedes der Glieder (22) Kreuzform aufweist.

4. Geflügelfütterungsanlage nach irgendeinem der Ansprüche 1 bis 3, **dadurch gekennzeichnet,** daß die sich in Längsrichtung erstreckenden Körper (26) der Glieder Koppelausbildungen (32, 34) aufweisen, die ein gelenkiges Koppeln der Glieder zur Bildung der Kette ermöglichen.

5. Geflügelfütterungsanlage nach Anspruch 4, **dadurch gekennzeichnet,** daß eine Koppelausbildung (34) an einem Ende jedes Gliedes eine Öse und eine Koppelausbildung (32) an dem anderen Ende des Glieds ein vertikal beabstandetes Paar von Ösen (36, 38) aufweist, wodurch die Einzelöse (46) an dem einen Ende eines Glieds in der Kette zwischen das Paar von Ösen (36, 38) an dem anderen Ende eines benachbarten Glieds eingeführt wird und die Glieder mittels eines Zapfens (24) miteinander gekoppelt werden, welcher vertikal durch die drei ausgerichteten Ösen eingeführt wird.

6. Geflügelfütterungsanlage nach irgendeinem der Ansprüche 1 bis 5, **dadurch gekennzeichnet,** daß jedes Glied (22) ein einstückiges Kunststoff-Formteil ist.

7. Geflügelfütterungsanlage nach irgendeinem der Ansprüche 1 bis 6, **dadurch gekennzeichnet,** daß die Kette mit Hilfe eines frei drehbaren Führungsrads (20) um eine Ecke geführt wird, welches so angeordnet ist, daß mit ihm Stirnflächen (80, 84) der Glied-Querstücke (28) in Eingriff kommen.

## Revendications

1. Système pour nourrir la volaille, comprenant une trémie de stockage pour la nourriture, une auge à fond plat (10) qui s'étend à partir de la trémie en suivant un trajet continu, et une chaîne d'entraînement sans fin (12) disposée de manière à s'étendre le long du fond de l'auge (10) pour déplacer le long de l'auge la nourriture libérée par la trémie, la chaîne (12) comprenant des maillons (22) dont chacun comporte un corps (26) disposé longitudinalement, qui est traversé par une pièce transversale (28) qui s'étend entre les parois latérales (16,18) de l'auge (10) pour repousser la nourriture dans l'auge, caractérisé en ce que les éléments transversaux (28) possèdent, sur chacun de côtés opposés, des surfaces verticales similaires (70,72) servant à saisir la nourriture et dont au moins les parties inférieures sont inclinées sur des bords les plus bas de l'élément transversal (28) pour exercer une action de raclage en glissant dans un sens ou dans l'autre le long de l'auge (10), des corps verticaux (26) et des éléments transversaux (28) de la chaîne formant une grille qui subdivise en compartiments l'auge (10) pour empêcher que la volaille n'éjecte la nourriture hors de l'auge (10).

2. Système de nourriture pour la volaille selon la revendication 1, caractérisé en ce que les éléments transversaux (28) des maillons forment des épaulements d'entraînement (58), contre lesquels s'engage une roue dentée agencée de manière à entraîner la chaîne le long de l'auge.

3. Système de nourriture pour la volaille selon l'une ou l'autre des revendications 1 et 2, caractérisé en ce que chacun des maillons (22) est cruciforme.

4. Système de nourriture de la volaille selon l'une quelconque des revendications 1 à 3, caractérisé en ce que les corps (26), qui s'étendent dans la direction longitudinale, des maillons comprennent des structures d'accouplement (32,34) permettant un accouplement pivotant des maillons entre eux dans l'ensemble de la chaîne.

5. Système de nourriture de la volaille selon la revendication 4, caractérisé en ce qu'une structure d'accouplement (34) située à une extrémité de chaque maillon comprend un oeillet (46) et qu'une structure d'accouplement (32) située à l'autre extrémité du maillon comprend un couple d'oeillets (36,38) espacés verticalement, l'oeillet unique (46) situé à une extrémité d'un maillon de la chaîne étant introduit entre les deux oeillets (36,38) situés au niveau de ladite autre extrémité d'un maillon adjacent, et les maillons étant accouplés au moyen d'une goupille (24) insérée verticalement à travers les trois oeillets alignés.

6. Système de nourriture de la volaille selon l'une quelconque des revendications 1 à 5, caractérisé en ce que chaque maillon (22) est formé d'une pièce moulée d'un seul tenant, réalisée en une matière plastique.

7. Système de nourriture de la volaille selon l'une quelconque des revendications 1 à 6, caractérisé en ce que la chaîne est guidée au niveau d'un angle par une roue de guidage (20) apte à tourner librement et agencée de manière que des faces terminales (80,84) des éléments transversaux (28) engrènent avec cette roue.
